# EUROPEAN PATENT APPLICATION

(11) **EP 4 141 305 A1**
(43) Date of publication of application: **01.03.2023**
(21) Application number: 21192537.5
(22) Date of filing: 23.08.2021
(51) Int. Cl.: F16L 9/19, F16L 11/22, F16L 53/70, F16L 59/08, F16L 59/14

(54) **TRACED PIPE ARRANGEMENT**

(71) Applicant: DHES B.V., 5674 TM Nuenen (NL)
(72) Inventor: Schoonen, Wilhelmus Franciskus, 5674 TM Nuenen (NL)
(74) Representative: Nederlandsch Octrooibureau

(57) **Abstract**

A traced pipe arrangement (1) for carrying a medium (M), comprising a primary pipe channel (2) configured for carrying the medium (M), a main secondary pipe channel (3) for carrying a coolant (C), wherein the secondary pipe channel (3) extends along the primary pipe channel (2) parallel thereto, and a shielding sheet (4) enclosing the primary pipe channel (2) and the secondary pipe channel (3).

## Description

### Field of the invention

The present invention relates to a traced pipe arrangement, in particular a traced pipe arrangement for carrying cooled, pressurised hydrogen as used by hydrogen refuelling stations.

### Background art

European patent application EP 2 703 709 A1 discloses a hydrogen station for supplying hydrogen to a hydrogen tank of a fuel cell vehicle. The hydrogen station includes a reciprocating compressor that is driven by a driver; a cooling device that is capable of cooling hydrogen supplied from the reciprocating compressor to the hydrogen tank; a temperature sensor that detects an internal temperature of the hydrogen tank or a temperature of the hydrogen supplied to the hydrogen tank; and a control unit that controls the revolution of the driver based on the temperature detected by the temperature sensor. A hydrogen charging passage connects an outlet of the cooling device to a charging nozzle or dispenser for connection to the hydrogen tank of the fuel cell vehicle.

In particular applications, the hydrogen charging passage arranged between the cooling device and the charging nozzle may become long due to, for example, restrictions on geographical locations as to where the fuel cell vehicle is to be refuelled and where the compressor and cooling device should be located. However, having a relatively long hydrogen charging passage carrying cooled pressurized hydrogen may cause an unwanted rise in temperature of the hydrogen at the dispenser as considerable thermal leakage may occur along the length of the hydrogen charging passage.

### Summary of the invention

The present invention seeks to solve at least in part the problems of the prior art by providing a traced pipe arrangement for carrying a medium, in particular cooled, pressurized hydrogen. The traced pipe arrangement minimizes thermal leakage between the medium flowing through the traced pipe arrangement and the ambient surroundings, thereby ensuring that the medium can be delivered at a required temperature.

According to the present invention, a traced pipe arrangement is provided, comprising a primary pipe channel configured for carrying the medium, a secondary pipe channel for carrying a coolant, wherein the secondary pipe channel extends along the primary pipe channel parallel thereto, and a shielding sheet enclosing the primary pipe channel and the secondary pipe channel.

When the traced pipe arrangement is in use, the coolant flows through the secondary pipe channel for cooling the primary pipe channel and the medium flowing there through. As a result, the heating of the medium by ambient surroundings is compensated so that the medium maintains a required temperature over longer stretches of the primary pipe channel. Furthermore, the shielding sheet enclosing the primary and secondary pipe channel is configured to provide and maintain a cooled "microclimate" in an internal/enclosed volume around the primary pipe channel by virtue of the secondary pipe channel being enclosed by the shielding sheet as well Therefore, the cooling provided by the secondary pipe channel is confined by the shielding sheet and as such a cooled microclimate surrounding the primary pipe channel is provided that minimizes heat transfer between the medium and ambient surroundings.

In an advantageous embodiment, the secondary pipe channel comprises a first coolant pipe and a second coolant pipe, wherein the primary pipe channel is arranged between the first and the second coolant pipe. In this embodiment the first and second coolant pipe are arranged on opposing sides of the primary pipe channel so that cooling thereof is more even as it is provided on both sides. The shielding sheet then ensures that the first and second coolant pipe are able to provide a cooled microclimate around the primary pipe channel.

In an advantageous embodiment, the shielding sheet may be a metallic shielding sheet, allowing to further spreading the cooling around the primary pipe channel as provided by the secondary pipe channel, e.g. the first and second coolant pipe.

In further embodiments the shielding sheet may comprises a first sheet part and a second sheet part, wherein the first and second sheet part are in engagement for enclosing, i.e. fully enclosing, the primary pipe channel and the secondary pipe channel. This simplifies the assembly of the traced pipe arrangement as each of the first and second sheet parts can be readily positioned at least in part around the primary and secondary pipe channel. For example, in an embodiment the first sheet part may comprise two end portions and wherein the second sheet part may comprise two end portions, wherein the two end portions of the first sheet part overlap and engage the two end portions of the second sheet part. By overlapping the two end portions of both the first and second sheet parts ensures a full enclosure of the primary and secondary pipe channel and a sealed internal volume. As such the shielding sheet is able to maintain a cooled microclimate for minimizing thermal transfer between the medium and the ambient surrounds.

### Short description of drawings

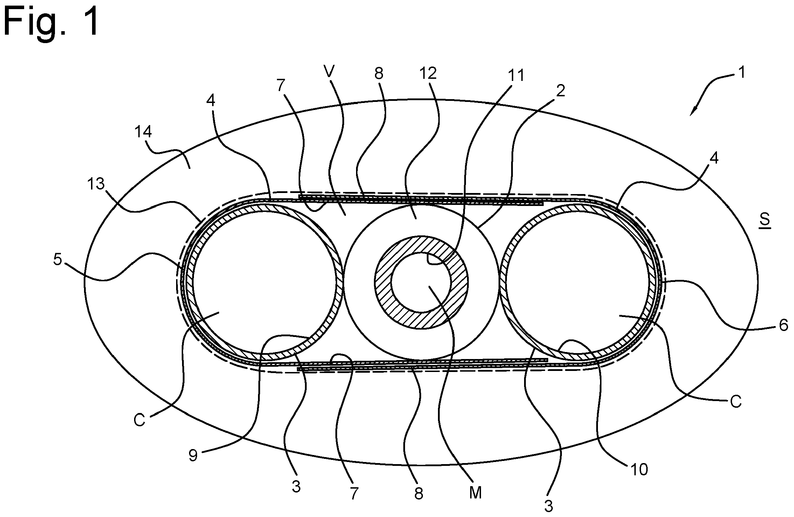

The present invention will be discussed in more detail below, with reference to the attached drawings, in which
Figure 1 shows schematic cross sectional view of a traced pipe arrangement according to an embodiment of the present invention.

### Description of embodiments

A traced pipe arrangement 1 is depicted in Figure 1 according to an embodiment of the present invention. The traced pipe arrangement 1 is configured to carry a medium "M" over relatively long distances and to ensure that ambient temperatures of the ambient surroundings S have little to no impact on the temperature of the medium M carried by the traced pipe arrangement 1. For example, in case the medium M is a cooled compressed hydrogen gas to be dispensed by a hydrogen refilling station, then having to transport the cooled hydrogen over long distances may cause an unwanted rise in temperature of the hydrogen at a dispenser nozzle as considerable thermal leakage may occur during transport.

The traced pipe arrangement 1 of the present invention addresses the need to keep thermal leakage of the medium M to a minimum. To that and the traced pipe arrangement 1 comprises a primary pipe channel 2 configured for carrying the medium M, a secondary pipe channel 3 for carrying a coolant "C", e.g. a cooling fluid or gas, wherein the secondary pipe channel 3 extends along the primary pipe channel 2 parallel thereto. The traced pipe arrangement 1 further comprises a shielding sheet 4 enclosing the primary pipe channel 2 and the secondary pipe channel 3. In an exemplary embodiment the medium M is cooled compressed gaseous hydrogen.

According to the present invention, when the traced pipe arrangement 1 is in use, the coolant C flows through the secondary pipe channel 3 and the medium M flows through the primary pipe channel 2. The shielding sheet 4 enclosing the primary and secondary pipe channel 2, 3 is then configured to provide and maintain a cooled "microclimate" in an internal volume V around the primary pipe channel 2 by virtue of the secondary pipe channel 3 being enclosed by the shielding sheet 4 as well. Therefore, the cooling provided by the secondary pipe channel 3 is confined within the enclosure of the shielding sheet 4 and as such a cooled microclimate in the internal volume V surrounding the primary pipe channel 2 is provided, wherein the cooled internal volume V compensates or minimizes thermal transfer between the medium M and the ambient surroundings S. The cooled internal volume V enclosed by the shielding sheet 4 is particularly advantageous when the medium M is a hydrogen gas at a temperature below - 20 °C, wherein the traced pipe arrangement 1 allows the hydrogen gas to remain below - 20 °C over a required transport distance.

As further depicted in the embodiment shown, the secondary pipe channel 3 may bear or lie against the primary pipe channel 2. In this embodiment the secondary pipe channel 3 may be in contact engagement with the primary pipe channel 2 to further improve the cooling thereof, e.g. through thermal conduction between the primary and secondary pipe channel 2, 3.

In an advantageous embodiment, the shielding sheet 4 may be a metallic shielding sheet, e.g. copper, so that the shielding sheet 4 is able to spread the cooling by the secondary pipe channel 3 around the primary pipe channel 2 through thermal conduction. As a result, the internal volume V provides for a more even spread of cooling around the primary pipe channel 2.

In an exemplary embodiment, the shielding sheet 4 comprises a first sheet part 5 and a second sheet part 6, wherein the first and second sheet part 5, 6 are in engagement for enclosing the primary pipe channel 2 and the secondary pipe channel 3. In this embodiment, the shielding sheet 4 comprises two sheet parts 5, 6 each of which encloses at least in part the primary and secondary pipe channels 2, 3. By proper placement of each of the two sheet parts 5, 6 and proper engagement there between, a shielding sheet 4 is obtained that fully encloses the primary and secondary pipe channels 2, 3. The first and second sheet parts 5, 6 allow for convenient assembly of the shielding sheet 4 as it they can be conveniently arranged and positioned as required over long distances.

In an alternative embodiment it is conceivable that the shielding sheet 4 is a single sheet wrapped around the primary and secondary pipe channel 2, 3 and wherein opposing ends of the single sheet overlap to provide a full enclosure.

In the embodiment as depicted, it can be seen that the first sheet part 5 may comprise two end portions 7 and wherein the second sheet part 6 may also comprise two end portions 8, wherein the two end portions 7 of the first sheet part 5 overlap and engage the two end portions 8 of the second sheet part 6. By overlapping all of the end portions 7, 8 as depicted it is possible to ensure a full enclosure of the primary and secondary pipe channel 2, 3 without any gaps between the first and second sheet parts 5, 6. Also, by overlapping all of the end portions 7, 8 provides for a double layered shielding sheet 4 at points of overlap, wherein the overlap of the end portions 7, 8 may locally increase thermal shielding of the primary and secondary pipe channels 2, 3.

As further shown in Figure 1, in an embodiment the secondary pipe channel 3 may comprise a first coolant pipe 9 and a second coolant pipe 10, wherein the primary pipe channel 2 is arranged between the first and the second coolant pipe 9, 10. In this embodiment the first and second coolant pipe 9, 10 are arranged on opposing sides of the primary pipe channel 2 so that improved distributed cooling is provided on both sides of the primary pipe channel 2. The shielding sheet 4 is arranged around the first and second coolant pipe 9, 10 and ensures that the cooled internal volume V around the primary pipe channel 2 is maintained along the length thereof.

In a further embodiment as depicted in Figure 1, the first sheet part 5 encloses in part the first coolant pipe 9 and wherein the two end portions 7 of the first sheet part 5 extend along the primary pipe channel 2, e.g. along opposing sides thereof. Likewise, the second sheet part 6 encloses in part the second coolant pipe 10 and wherein the two end portions 8 of the second sheet part 6 extend along the primary pipe channel 2, e.g. along opposing side thereof. Note that in this embodiment the two end portions 7 of the first sheet part 5 may be in overlapping engagement with the two end portions 8 of the second sheet part 6. The first sheet part 5 may then extend or conduct the cooling provided by the first coolant pipe 9 via the two end portions 7 to the primary pipe channel 2, and wherein the second sheet part 6 extends or conducts the cooling provided by the second coolant pipe 10 via the two end portions 8 to the primary pipe channel 2. So in this way the primary pipe channel 2 may be subjected to improved cooling around its circumference even though there are only two coolant pipes 9, 10 on opposing sides of the primary pipe channel 2.

As an alternative embodiment it is conceivable that two end portions 7 of the first sheet part 5 abut the two end portions 8 of the second sheet part 6. That is, in this embodiment there is no overlapped engagement between the end portions 7, 8 but wherein the end portions 7, 8 abut along their smallest side.

In an embodiment, the first and second sheet part 5, 6, may be welded together, e.g. where the end portions 7, 8 are welded together for providing full enclosure of the primary and secondary pipe channel 2, 3.

Although not shown in the schematic cross section of Figure 1, the first coolant pipe 9 and the second coolant pipe 10 may be fluidly connected for circulating the coolant C through the first and second cooling pipes 9, 10 in opposing direction. That is, in this embodiment the coolant C may flow through the first coolant pipe 9 along the primary pipe channel 2 in a first direction and to return through the second coolant pipe 10 in an opposing second direction, thereby creating a closed coolant loop along the primary pipe channel 2 allowing for a single end point of the traced pipe arrangement 1 for entry and exit of the coolant C.

To further insulate the primary pipe channel 2 from the ambient surroundings S, an embodiment is provided wherein the primary pipe channel 2 comprises an inner pipe 11 for carrying the medium M, e.g. cooled compressed hydrogen gas, and an inner insulating layer 12 enclosing the inner pipe 11. In this embodiment the shielding sheet 4 still provides for a cooled microclimate in the internal volume V around the primary pipe channel 2 during use, i.e. around the inner insulating layer 12 and inner pipe 11. The inner insulating layer 12 further inhibits thermal transfer between the inner pipe 5, the inner volume V and ultimately the ambient surroundings S. This ensures that the medium M can be maintained at a required temperature over long distances of the traced pipe arrangement 1.

As mentioned earlier, the secondary pipe channel 3 may bear or lie against the primary pipe channel 2. Therefore, in the aforementioned embodiment, the secondary pipe channel 3 may bear against the inner insulating layer 12, so wherein the first coolant pipe 9 and the second coolant pipe 10 may each bear against the inner insulating layer 12 to minimize the internal volume V to achieve optimal cooled conditions around the primary pipe channel 2. In an exemplary embodiment, the inner insulating layer 12 may have a thickness of at least 3 mm or more for achieving sufficiently high thermal insulation of the inner pipe 5.

It was indicated above that the shielding sheet 4 encloses the primary and secondary pipe channel 2, 3 to provide and maintain a cooled internal volume V around the primary pipe channel 2 by virtue of the secondary pipe channel 3 being enclosed by the shielding sheet 4 as well. The cooling provided by the secondary pipe channel 3 is thus confined within the enclosure of the shielding sheet 4 and as such a cooled microclimate surrounding the primary pipe channel 2 is provided to minimize thermal transfer from the ambient surroundings S when the medium M flows through the primary pipe channel 2, e.g. the inner pipe 11, over long distances.

To further ensure that a cooled environment around the primary pipe channel 2 can be maintained, an embodiment is provided wherein a tape 13 is arranged (e.g. wrapped) around the shielding sheet 4. The tape 13 provides further air tightness of the internal volume V enclosed by the shielding shield 4, allowing for improved thermal insulation of the primary pipe channel 2. In an exemplary embodiment it is conceivable that the tape 13 is an adhesive tape allowing to be wrapped tightly around the shielding sheet 4 to provide and maintain a strong airtight barrier.

To even further reduce thermal transfer between the ambient surroundings S and the medium M, an embodiment is provided as shown in Figure 1 comprising an outer insulating layer 14 arranged around the shielding sheet 4 (or tape 13). This outer insulating layer 14 further reduces heating of the medium M when it flows through the primary pipe channel 2. In an exemplary embodiment, the outer insulating layer 14 may have a thickness of at least 25 mm or more to achieve good thermal insulation from the ambient surroundings S.

In view of the above, the present invention can now be summarised by the following embodiments:
Embodiment 1. A traced pipe arrangement (1) for carrying a medium (M), comprising a primary pipe channel (2) configured for carrying the medium (M), a secondary pipe channel (3) for carrying a coolant (C), wherein the secondary pipe channel (3) extends along the primary pipe channel (2) parallel thereto, and a shielding sheet (4) enclosing the primary pipe channel (2) and the secondary pipe channel (3).
Embodiment 2. The traced pipe arrangement according to embodiment 1, wherein the secondary pipe channel (3) bears against the primary pipe channel (2).
Embodiment 3. The traced pipe arrangement according to embodiment 1 or 2, wherein the shielding sheet (4) comprises a first sheet part (5) and a second sheet part (6), and wherein the first and second sheet part (5, 6) are in engagement for enclosing the primary pipe channel (2) and the secondary pipe channel (3).
Embodiment 4. The traced pipe arrangement according to embodiment 3, wherein the first sheet part (5) comprises two end portions (7) and wherein the second sheet part (6) comprises two end portions (8), wherein the two end portions (7) of the first sheet part (5) overlap and engage the two end portions (8) of the second sheet part (6).
Embodiment 5. The traced pipe arrangement according to any one of embodiments 1-4, wherein the secondary pipe channel (3) comprises a first coolant pipe (9) and a second coolant pipe (10), wherein the primary pipe channel (2) is arranged between the first and the second coolant pipe (9, 10).
Embodiment 6. The traced pipe arrangement according to embodiment 4 and 5, wherein the first sheet part (5) encloses in part the first coolant pipe (9) and wherein the two end portions (7) of the first sheet part (5) extend along the primary pipe channel (2); and
   wherein the second sheet part (6) encloses in part the second coolant pipe (10) and wherein the two end portions (8) of the second sheet part (6) extend along the primary pipe channel (2).
Embodiment 7. The traced pipe arrangement according to embodiment 5 or 6, wherein the first coolant pipe (9) and the second coolant pipe (10) are fluidly connected for circulating the coolant (C) through the first and second cooling pipes (9, 10) in opposing direction.
Embodiment 8. The traced pipe arrangement according to any one of embodiments 1-7, wherein the primary pipe channel (2) comprises an inner pipe (11) for carrying the medium (M), and an inner insulating layer (12) enclosing the inner pipe (11).
Embodiment 9. The traced pipe arrangement according to embodiment 5 and 8, wherein the first coolant pipe (9) and the second coolant pipe (10) each bear against the inner insulating layer (12).
Embodiment 10. The traced pipe arrangement according to embodiment 8 or 9, wherein the inner insulating layer (12) has a thickness of least 3 mm or more.
Embodiment 11. The traced pipe arrangement according to any one of embodiments 1-10, further comprising a tape wrapped around the shielding sheet (4).
Embodiment 12. The traced pipe arrangement according to any one of embodiments 1-11, further comprising an outer insulating layer (13) surrounding the shield layer (4).
Embodiment 13. The traced pipe arrangement according to embodiment 12, wherein the outer insulating layer (13) has a thickness of at least 25 mm or more
Embodiment 14. The traced pipe arrangement according to any one of the embodiments 1-14, wherein the medium (M) is hydrogen gas at a temperature below -20 °C.
Embodiment 15. The traced pipe arrangement according to any one of embodiments 1-14, wherein the shielding sheet (4) is a metallic shielding sheet.

The present invention has been described above with reference to a number of exemplary embodiments as shown in the drawings. Modifications and alternative implementations of some parts or elements are possible, and are included in the scope of protection as defined in the appended claims.

## Claims

1. A traced pipe arrangement (1) for carrying a medium (M), comprising a primary pipe channel (2) configured for carrying the medium (M), a secondary pipe channel (3) for carrying a coolant (C), wherein the secondary pipe channel (3) extends along the primary pipe channel (2) parallel thereto, and a shielding sheet (4) enclosing the primary pipe channel (2) and the secondary pipe channel (3).

2. The traced pipe arrangement according to claim 1, wherein the secondary pipe channel (3) bears against the primary pipe channel (2).

3. The traced pipe arrangement according to claim 1 or 2, wherein the shielding sheet (4) comprises a first sheet part (5) and a second sheet part (6), and wherein the first and second sheet part (5, 6) are in engagement for enclosing the primary pipe channel (2) and the secondary pipe channel (3).

4. The traced pipe arrangement according to claim 3, wherein the first sheet part (5) comprises two end portions (7) and wherein the second sheet part (6) comprises two end portions (8), wherein the two end portions (7) of the first sheet part (5) overlap and engage the two end portions (8) of the second sheet part (6).

5. The traced pipe arrangement according to any one of claims 1-4, wherein the secondary pipe channel (3) comprises a first coolant pipe (9) and a second coolant pipe (10), wherein the primary pipe channel (2) is arranged between the first and the second coolant pipe (9, 10).

6. The traced pipe arrangement according to claim 4 and 5, wherein the first sheet part (5) encloses in part the first coolant pipe (9) and wherein the two end portions (7) of the first sheet part (5) extend along the primary pipe channel (2); and
wherein the second sheet part (6) encloses in part the second coolant pipe (10) and wherein the two end portions (8) of the second sheet part (6) extend along the primary pipe channel (2).

7. The traced pipe arrangement according to claim 5 or 6, wherein the first coolant pipe (9) and the second coolant pipe (10) are fluidly connected for circulating the coolant (C) through the first and second cooling pipes (9, 10) in opposing direction.

8. The traced pipe arrangement according to any one of claims 1-7, wherein the primary pipe channel (2) comprises an inner pipe (11) for carrying the medium (M), and an inner insulating layer (12) enclosing the inner pipe (11).

9. The traced pipe arrangement according to claim 5 and 8, wherein the first coolant pipe (9) and the second coolant pipe (10) each bear against the inner insulating layer (12).

10. The traced pipe arrangement according to claim 8 or 9, wherein the inner insulating layer (12) has a thickness of least 3 mm or more.

11. The traced pipe arrangement according to any one of claims 1-10, further comprising a tape wrapped around the shielding sheet (4).

12. The traced pipe arrangement according to any one of claims 1-11, further comprising an outer insulating layer (13) surrounding the shield layer (4).

13. The traced pipe arrangement according to claim 12, wherein the outer insulating layer (13) has a thickness of at least 25 mm or more

14. The traced pipe arrangement according to any one of the claims 1-14, wherein the medium (M) is hydrogen gas at a temperature below -20 °C.

15. The traced pipe arrangement according to any one of claims 1-14, wherein the shielding sheet (4) is a metallic shielding sheet.
